# EUROPEAN PATENT SPECIFICATION

(11) **EP 0 789 236 B1**
(45) Date of publication and mention of the grant of the patent: **24.04.2002**
(21) Application number: 96101744.9
(22) Date of filing: 07.02.1996
(51) Int. Cl.: G01N 21/77

(54) **Environmental sensor**
Sensor zur Erfassung von Umgebungsbedingungen
Capteur sensible aux conditions d'environnement

(43) Date of publication of application: 13.08.1997
(73) Proprietor: MOTOROLA, INC., Schaumburg, IL 60196 (US)
(72) Inventor: Ackley, Donald E., Lambertville, New Jersey 08530 (US); Krihak, Michael, Kenilworth, New Jersey 07033 (US); Shieh, Chan-Long, Paradise Valley, Arizona 85253 (US)
(74) Representative: Gibson, Sarah Jane

(56) References cited:
- EP-A- 0 284 518
- EP-A- 0 410 181
- EP-A- 0 534 670
- US-A- 4 399 099
- US-A- 4 872 759
- US-A- 5 089 232

## Description

### Background of the Invention

The present invention relates, in general, to sensors, and more particularly, to a novel optical sensor.

Glass fiber optic cables have previously been used as pH sensors and to detect the presence of chemicals such as carbon dioxide, carbon monoxide, and ammonia. A small section of the cladding on a cladded fiberoptic cable is removed to expose a small section of the fiber. A sol-gel derived silica glass containing a chemically sensitive dye is prepared and applied to the outside of the exposed fiber so that light does not pass through or contact the silica glass containing the chemically sensitive dye. When exposed to different levels of the chemical analyte, the transmissive capability of the fiberoptic cable is altered thereby changing the light that passes through the cable.

One problem with the prior sensors is the manufacturing cost. A portion of the cladding must be removed in a central portion of the cable, and then the sol-gel is applied to the cylindrical cable portion that is exposed. Removing the cladding and applying the sol-gel is a labor intensive, thus, expensive operation. Additionally, it is difficult to control the thickness and uniformity of the sol-gel coating. Consequently, the response time of the sensor varies according to the thickness of the sol-gel coating. Furthermore, it is difficult to produce an array of multiple sensors suitable for sensing multiple chemicals and elements.

Accordingly, it is desirable to have an optical sensor that is easy to manufacture, that has a low manufacturing cost, that has a well controlled response time, and that can easily be formed into an array of multiple sensor elements.

From U.S. patent no. 5,089,232, European patent publication 534,670-A, U.S. patent no. 4,399,099 and European patent publication 284,518-A there are known environmental sensors. U.S. patent no. 5,089,232 discloses a sensor provided with channels the interior of which is coated with a sol-gel indicator layer.

### Summary of the Invention

In accordance with the present invention there is provided an environmental sensor as claimed in claim 1.

### Brief Description of the Drawings

FIG. 1 illustrates a perspective view of an optical sensor in accordance with the present invention;
FIG. 2 illustrates a cross-sectional elevation of an alternate embodiment of an optical sensor in accordance with the present invention;
FIG. 3 illustrates a cross-sectional elevation of another embodiment of an optical sensor having optical devices in accordance with the present invention;
FIG. 4 illustrates a cross-sectional elevation of another embodiment of an optical sensor having optical devices in accordance with the present invention; and
FIG. 5 illustrates a cross-sectional plan view of another embodiment of an optical sensor in accordance with the present invention.

### Detailed Description of the Drawings

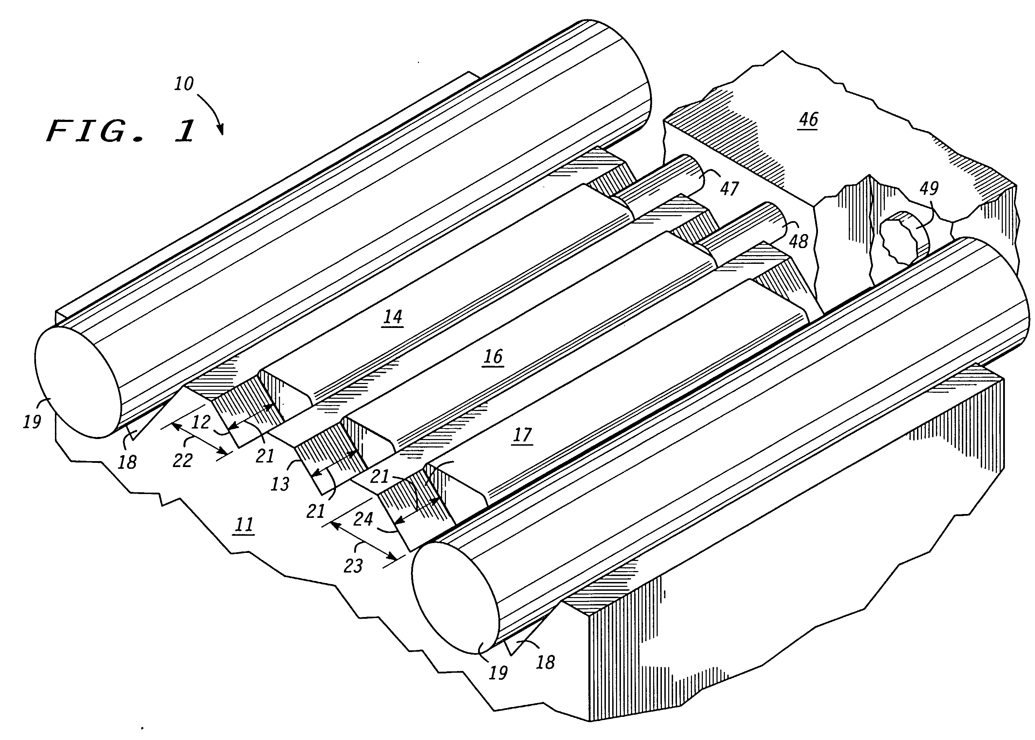

FIG. 1 illustrates a perspective view of an environmental sensor or optical sensor 10 that has an array of optical sensor elements. Sensor 10 is formed on a substrate 11, for example silicon, on which a plurality of parallel V-shaped grooves, such as a first groove 12, a second groove 13, and a third groove 24, are formed on a surface of substrate 11. Grooves 12, 13, and 24 are formed by etching techniques that are well known to those skilled in the art. When silicon having a <100> orientation is utilized, the etching results in the V-grooves having walls with an angle of approximately 54.7°. Within grooves 12, 13, and 24, are formed a first sol-gel sensor element 14, a second sol-gel sensor element 16, and a third sol-gel sensor element 17, respectively. Elements 14, 16, and 17 include a hydrolyzed sol-gel material formed by hydrolyzing a silica gel, such as tetraethylorthosilicate or methyltrimethoxysilane, with an alcohol and water, and optionally a catalyst such as hydrochloric acid. Methods for hydrolyzing sol-gels are well known to those skilled in the art. Typically, a mask is applied to the surface of substrate 11, and patterned to form openings exposing the portion of grooves 12, 13, and 24 in which elements 14, 16, and 17 are to be formed. The mask is removed, and the sol-gel mixture is prepared and hydrolyzed. After the hydrolysis, a chemical indicator is added to the sol-gel mixture, and the mixture is applied to the surface of substrate 11 by spin coating or other techniques that result in a uniform application. The chemical indicator typically is a dye that is sensitive to analytes that are to be measured or sensed in the environment to which sensor 10 is exposed. The sol-gel is dried completing elements 14, 16, and 17 in grooves 12, 13, and 24 respectively.

In operation, light is injected into one or a plurality of elements 14, 16, and 17. The chemical indicator in elements 14, 16, and 17 reacts with the surrounding environment and transforms the light that is passing through elements 14, 16, and 17. The effect on the light depends on the type of indicator in elements 14, 16, and 17 and the interaction between the indicator and the surrounding environment. After exposure to an atmospheric chemical to be sensed, the absorption of the indicator at a certain light wavelength typically is changed so that the intensity of light exiting elements 14, 16, and 17 is different from the light entering the elements. Other types of indicators absorb the incoming light and use the absorbed energy to emit a specific light wavelength so that the light exiting elements 14, 16, and 17 is determined by the emission frequency of the chemical indicator. Such indicators typically are referred to as operating in a fluorescence mode. Some typical indicators, the mode of operation, and the element being sensed are listed in the table below:

| Indicator | Mode | Sensing |
|---|---|---|
| fluorescein | Fluorescence | oxygen,Humidity,pH |
| bromocresol Green | Absorption | pH |
| bromocresol Purple | Absorption | ammonia,pH |
| Ru(bpy)²⁺ | Fluorescence | oxygen |
| Ru(ph₂phen)₃²⁺ | Fluorescence | oxygen |
| cobalt Chloride | Absorption | humidity |
| porphyrin | Absorption | heavy metals, ammonia,pH. |

Typically, light is injected into elements 14, 16, and 17 utilizing a fiber ribbon cable 46 having individual optical conduits or fibers such as a first optical fiber 47, a second optical fiber 48, and a third optical fiber 49. The length of elements 14, 16, and 17 is typically the length of substrate 11 to provide for optically coupling to fibers 47, 48, and 49, respectively. Although a space 21 may remain between an end of elements 14, 16, and 17 and the end of each groove 12, 13, and 24, respectively, it is desirable that space 21 be as small as possible to provide optimum coupling to fibers 47, 48, and 49. The size of space 21 in FIG. 1 is exaggerated for simplicity of the drawing and the explanation.

The depth of grooves 12, 13, and 24 is selected to provide the most efficient optical coupling to fibers 47, 48, and 49. Typically, the depth is formed to provide either single mode or multi-mode operation within elements 14, 16, and 17 at the wavelength of light that is to be injected into elements 14, 16, and 17. The depth of grooves 12, 13, and 24 is determined by the width at the base of the triangle formed by each groove or top of each grove because the etching results in walls at an angle of approximately 54.7°. Typically, all grooves have substantially the same width although groove 24 is shown to have a width 23 of approximately thirty-five to fifty microns to provide multi-mode operation while grooves 12 and 13 have a width 22 of approximately ten to fifteen microns to provide single mode operation.

Because of the depth of groove 24 is greater than grooves 12 and 13, element 17 can be a multi-layer sol-gel sensor element that is formed in layers by successive application and curing of the hydrolyzed sol-gel material. The sol-gel material for the bottom layers can be either dispensed or spun-on. In such a layered implementation, the bottom layer or layers can be formed without a chemical indicator while the indicator resides only in the top layer. Using different layers facilitates changing the index of refraction from the bottom to the top of element 17 to cause the mode of light transmission to gradually change from uniformly illuminating the entire element near the ends of element 17 to illuminating only the top layer. This decreases the response time of element 17 since the indicator and the light reside near the surface of element 17.

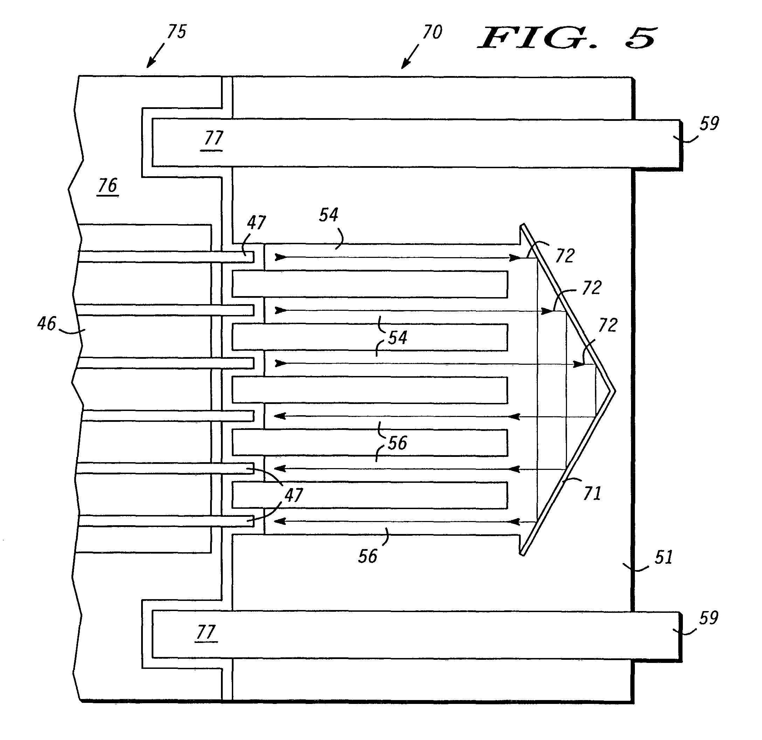

Sensor 10 also includes a plurality of alignment grooves 18 formed along outside edges of substrate 11 and parallel to grooves 12, 13, and 24. A locating pin 19 within each alignment groove 18 is used to align an external connector, as described hereinafter in FIG 5, to sensor 10 so that optical fibers, such as fibers 47, 48, and 49, are optically coupled to elements 14, 16, and 17 as will be explained hereinafter in FIG. 5. Each pin 19 typically has a length that is greater than a length of substrate 11 to facilitate mating with the external connector.

By etching the V-grooves into substrate 11, grooves 12, 13, and 24 have very smooth walls that facilitate elements 14, 16, and 17 functioning as low loss waveguides for light passing through elements 14, 16, and 17. Since semiconductor etching techniques are utilized, grooves 12, 13, and 24 and sensor elements 14, 16, and 17 always have the same shape and are easily formed into large arrays to facilitate multi-channel operation. Utilizing spin coating of the sol-gel further enhances the repeatability and manufactureability of sensor 10. Furthermore, spin coating allows laminating layers to vary the index of refraction of the optical sensor elements and to allow for forming thick sensor elements for multi-mode operation.

Forming an array of multiple optical sensor elements allows forming one element without a chemical indicator to function as a reference channel to optimize sensitivity and stability of sensor 10. Furthermore, using an array of elements facilitates using a different chemical indicator in each element so that sensor 10 can detect a variety of chemicals or conditions in the surrounding environment.

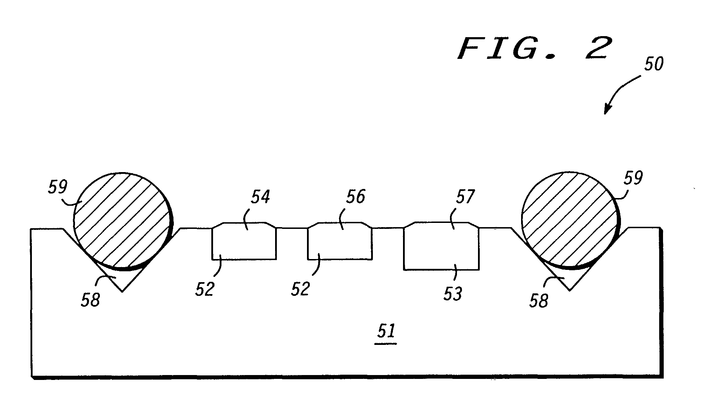

FIG. 2 is a cross-sectional illustration of an optical sensor 50 that is another embodiment of sensor 10 shown in FIG. 1. Sensor 50 has a molded substrate 51 that is molded from plastic or other suitable material. Substrate 51 is molded with a first plurality of grooves 52 that function similarly to grooves 12 and 13 shown in FIG. 1, and a deeper groove 53 that functions similarly to groove 24 shown in FIG. 1. Grooves 52 and 53 can have various shapes since grooves 52 and 53 are molded, but are square in the preferred embodiment. Alignment grooves 58 that function similarly to grooves 18 (FIG. 1) are also formed when substrate 51 is molded. Subsequently, a first sensor element 54, a second sensor element 56, and a third sensor element 57 that function similarly to elements 14, 16, and 17 (FIG. 1), respectively. Elements 54, 56, and 57 typically are formed by dispensing the sol-gel into grooves 52 and 53 instead of spinning-on coating. Locating pins 59 function similarly to locating pins 19 shown in FIG. 1.

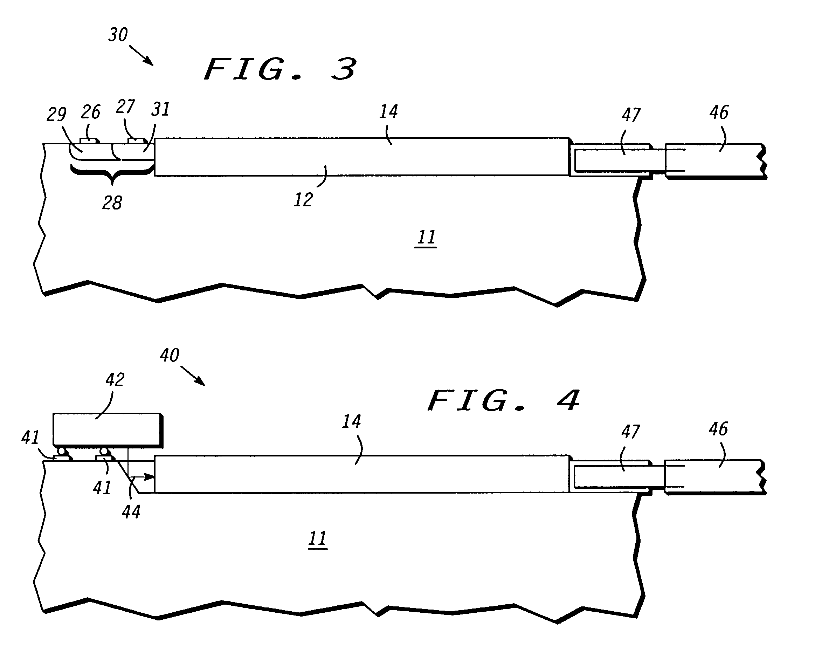

FIG. 3 illustrates a cross-sectional portion of an optical sensor 30 that is an alternate embodiment of sensor 10 shown in FIG. 1. Elements of FIG. 3 that have the same reference numbers as FIG. 1 are similar to the corresponding FIG. 1 elements. Sensor 30 has optical devices that are formed in substrate 11 and optically coupled to sensor element 14. An optical detector 28 is formed in substrate 11 adjacent to a first end of element 14. Detector 28 has an anode 29 and a cathode 31 so that detector 28 may detect light that has been injected into element 14 by fiber 47. Bonding pads 26 and 27 are provided to form electrical contact to anode 29 and cathode 31, respectively. Fiber 47 is coupled to a second end of element 14.

By using a substrate material that is compatible with forming optical emitters, sensor 30 could also include optical emitters coupled to the second end of element 14 in place of fiber 47. For example, using a gallium arsenide substrate 11, a light emitting diode could be used as a emitter, or using a gallium arsenide with an epitaxial growth as substrate 11, a laser emitter could be formed along with the detector.

FIG. 4 illustrates a cross-sectional portion of an optical sensor 40 that is another embodiment of optical sensor 10 shown in FIG. 1. Elements of FIG. 4 that have the same reference numbers as FIG. 1 are similar to the corresponding FIG. 1 elements. Although explained relative to FIG. 1, sensor 40 also could be another embodiment of sensor 50 shown in FIG. 2. Sensor 40 has an optical device 42 optically coupled to a first end of element 14. Device 42 could be an optical detector for sensing light injected into element 14 by fiber 47 or could be an optical emitter for injecting light 44, illustrated by an arrow, into element 14 for coupling to fiber 47. Device 42 typically is attached to bonding pads 41, on a surface of substrate 11, by solder bump or other techniques that are well known to those skilled in the art. In order to couple light 44 into or out of element 14 and device 42, device 42 is positioned so that light 44 reflects off of the slanted wall of V-grove 12 (FIG. 1), thus, the slanted end wall of V-groove 12 functions as a mirror for light 44. Alternately, device 42 could be an edge emitting emitter with the emission area coupled to element 14 or device 42 could be mounted on an electrical substrate such as a printed circuit board that is attached to bonding pads 41.

The embodiments shown in FIG. 3 and FIG. 4 facilitate manufacturing the sensors with light sources and detectors thereby reducing labor and lowering the costs of such sensors. This allows the formation of a more compact sensor that is readily interfaced to electronic readout circuitry. Additionally, costs of fiber ribbon cable is reduced with sensor 30 (FIG. 3) and sensor 40 (FIG. 4).

FIG. 5 illustrates a cross-sectional plan view of an optical sensor 70 that is an alternate embodiment of sensor 50 shown in FIG. 2. Elements of FIG. 5 that have the same reference numbers as FIG. 2 are similar to the corresponding FIG. 2 elements. Substrate 51 has a prism 71 molded into substrate 51. Prism 71 is near a first end of each sensor element 54 and 56, and optically coupled to the first end of each element 54 and 56. An optical connector 75 includes a fiber ribbon cable 46 having a plurality of optical fibers 47 that are optically coupled to sensor elements 54 and 56. A portion of fibers 47 inject light into elements 54 as shown by arrows 72, the light exits elements 54, enters prism 71 where it is internally reflected and coupled back to corresponding elements 56, and coupled into corresponding fibers 47, as shown by arrows 72.

Connector 75 has a connector body 76 attached to cable 46 to hold cable 46 firmly in place. Typically, body 76 is a molded plastic that is molded around cable 46. Connector 75 also has alignment openings 77 aligned to pins 59 for receiving pins 59. Cable 46 is positioned relative to pins 59 prior to molding so that fibers 47 align with elements 54 and 56. It should be noted that connector 75 is also suitable for use with sensor 10 (FIG. 1), sensor 50 (FIG. 2), sensor 30 (FIG. 3), and sensor 40 (FIG. 4). Additionally, the chemical indicator can be omitted from the embodiments shown in FIG. 3, FIG. 4, and FIG. 5 to facilitate using sensors 30, 40, and 50 as compact optical steering devices or electro-optic devices.

Prism 71 facilitates the implementation of a single fiber ribbon cable thereby reducing the size and corresponding cost of a sensor system.

By now it should be appreciated that a novel sensor has been provided. Forming grooves by etching or by molding facilitates accurate placement and low manufacturing costs. Spinning-on the sol-gel and indicator material results in accurate control of the thickness with corresponding fast response time, highly repeatable sensor elements, and low manufacturing costs. Additionally, etching or molding the groves, and spinning-on the sol-gel and indicator facilitates forming arrays of indicators in a small area that can be used to sense a variety of chemicals and conditions in the environment.

## Claims

1. An environmental sensor (10;30;40;50;70) comprising:
a substrate (11;51) having a surface;
a first groove (12;52) extending from the surface into the substrate;
a first sol-gel sensor element (14;54) having first and second ends; and formed in the first groove so as to transit light from said first end to said second end; and
a first dye added to the first sol-gel sensor element responsive to the surrounding environment to change the intensity of light transmitted from the first end through the first sol-gel sensor element to the second end.

2. The sensor (10;30;40;50;70) of claim 1 further including an emitter (28) integrated into the substrate for emitting optical signals from the first end of the first sol-gel sensor element (14;54).

3. The sensor (10;30;40;50;70) of claim 1 wherein the first sol-gel sensor element (14;54) is multi-layered having only the top layer formed with the first dye.

4. The sensor (10;30;40;50;70) of claim 1 further including a fiber ribbon cable (46) having at least one optical fiber (47) aligned to the first groove (12) so that the first end of the first sol-gel sensor element (14;54) is optically coupled to the at least one optical fiber (47).

5. The sensor (10;30;40;50;70) of claim 1 further including:
a second groove (13;53) formed on the surface of the substrate;
a second sol-gel sensor element (14;54) having first and second ends and formed in the second groove without the first dye that reacts with the surrounding environment to change the intensity of light transmitted from the first end through the second sol-gel sensor element to the second end.

6. The sensor (10;30;40;50;70) of claim 1 wherein the first sol-gel sensor element (14;54) and the first dye are formed in the first groove by a deposition process.

7. The sensor (10;30;40;50;70) of claim 5 wherein the substrate (11;51) is a molded plastic material and the first groove is molded into the molded plastic material.

8. The sensor (10;30;40;50;70) of claim 7 further including a prism (71) molded into the substrate (51), the prism optically coupled for receiving light from the second end of the first sol-gel sensor element (13;53) and reflecting the light into the second end of the second sol-gel sensor element (14;54).

9. The sensor (10;30;40;50;70) of claim 1 wherein the first dye is one of fluorescein, bromocresol green, bromocresol purple, Ru(pby)²⁺, or Ru(Ph₂phen)₃²⁺.

10. The sensor (10;30;40;50;70) of claim 5 further including:
a third groove (24;53) formed on the surface of the substrate;
a third sol-gel sensor element (17;57) formed in the third groove with a second dye responsive, differently to the first dye, to the surrounding environment to change the intensity of light transmitted from a first end through the third sol-gel sensor element to a second end.

## Patentansprüche

1. Sensor (10; 30; 40; 50; 70) zum Erfassen von Umgebungsbedingungen umfassend:
ein Substrat (11; 51) mit einer Oberfläche;
eine erste Kerbe (12; 52), die sich von der Oberfläche in das Substrat erstreckt;
ein erstes Sol-Gel Sensorelement (14; 54) mit einem ersten und zweiten Ende, das derart in der ersten Kerbe ausgebildet ist, dass es Licht von dem ersten Ende zu dem zweiten Ende leitet; und
einem dem ersten Sol-Gel Sensorelement zugefügten ersten Farbstoff, der auf die umliegende Umgebung anspricht, um die Intensität des von dem ersten Ende durch das erste Sol-Gel Sensorelement zu dem zweiten Ende geleiteten Lichts zu ändern.

2. Sensor (10; 30; 40; 50; 70) nach Anspruch 1, weiter enthaltend einen in das Substrat integrierten Emitter (28) zum Aussenden optischer Signale von dem ersten Ende des ersten Sol-Gel Sensorelements (14; 54).

3. Sensor (10; 30; 40; 50; 70) nach Anspruch 1, bei dem das erste Sol-Gel Sensorelement (14; 54) mehrlagig ist, wobei nur die obere Lage mit dem ersten Farbstoff ausgebildet ist.

4. Sensor (10; 30; 40; 50; 70) nach Anspruch 1, weiter enthaltend ein Faser-Flachkabel (46) mit zumindest einer optischen Faser (47), ausgerichtet auf die erste Kerbe (12), so dass das erste Ende des ersten Sol-Gel Sensorelements (14; 54) optisch mit der zumindest einen Faser (47) gekoppelt ist.

5. Sensor (10; 30; 40; 50; 70) nach Anspruch 1, weiter enthaltend:
eine zweite Kerbe (13; 53), die auf der Oberfläche des Substrats ausgebildet ist;
ein zweites Sol-Gel Sensorelement (14; 54) mit einem ersten und zweiten Ende und in der zweiten Kerbe ohne den ersten Farbstoff ausgebildet, der mit der umliegenden Umgebung reagiert, um die Intensität des von dem ersten Ende durch das zweite Sol-Gel Sensorelement zu dem zweiten Ende geleiteten Lichts zu ändern.

6. Sensor (10; 30; 40; 50; 70) nach Anspruch 1, bei dem das erste Sol-Gel Sensorelement (14; 54) und der erste Farbstoff in der ersten Kerbe durch einen Auftragungsvorgang ausgebildet sind.

7. Sensor (10; 30; 40; 50; 70) nach Anspruch 5, bei dem das Substrat (11; 51) ein geformtes Kunststoffmaterial ist und die erste Kerbe in das geformte Kunststoffmaterial geformt ist.

8. Sensor (10; 30; 40; 50; 70) nach Anspruch 7, weiter enthaltend ein in das Substrat (51) geformtes beziehungsweise eingebrachtes Prisma (71), wobei das Prisma optisch zum Empfangen von Licht aus dem zweiten Ende des ersten Sol-Gel Sensorelements (13; 53) und zum Reflektieren des Lichts in das zweite Ende des zweiten Sol-Gel Sensorelements (14, 54) gekoppelt ist.

9. Sensor (10; 30; 40; 50; 70) nach Anspruch 1, bei dem der erste Farbstoff einer ist von Fluorescein, Bromocresol Grün, Bromocresol Purpur, Ru(bpy)²⁺ oder Ru(Ph₂phen)₃²⁺.

10. Sensor (10; 30; 40; 50; 70) nach Anspruch 5, weiter enthaltend:
eine dritte Kerbe (24; 53), die auf der Oberfläche des Substrats ausgebildet ist;
ein drittes Sol-Gel Sensorelement (17; 57), das in der dritten Kerbe mit einem zweiten Farbstoff ausgebildet ist, der auf die umliegende Umgebung anders als der erste Farbstoff anspricht, um die Intensität des von einem ersten Ende durch das dritte Sol-Gel Sensorelement zu einem zweiten Ende geleiteten Lichts zu ändern.

## Revendications

1. Capteur (10 ; 30 ; 40 ; 50 ; 70) d'environnement, qui comprend :
un substrat (11 ; 51) possédant une surface ;
une première rainure (12 ; 52) s'étendant dans le substrat depuis la surface ;
un premier élément capteur sol-gel (14 ; 54) possédant des première et deuxième extrémités et formé dans la première rainure de façon à transmettre la lumière de ladite première extrémité à ladite deuxième extrémité, et
un premier colorant ajouté au premier élément capteur sol-gel qui répond à l'environnement avoisinant en modifiant l'intensité de la lumière transmise de la première extrémité à la deuxième extrémité via le premier élément capteur sol-gel.

2. Capteur (10 ; 30 ; 40 ; 50 ; 70) selon la revendication 1, comportant en outre un émetteur (28) intégré dans le substrat et servant à émettre des signaux optiques depuis la première extrémité du premier élément capteur sol-gel (14 ; 54).

3. Capteur (10 ; 30 ; 40 ; 50 ; 70) selon la revendication 1, où le premier élément capteur sol-gel (14 ; 54) est une multicouche, dont seule la couche de dessus est formée avec le premier colorant.

4. Capteur (10 ; 30 ; 40 ; 50 ; 70) selon la revendication 1, comportant en outre un câble plat en fibre (46) possédant au moins une fibre optique (47) alignée sur la première rainure (12) de façon que la première extrémité du premier élément capteur sol-gel (14 ; 54) soit optiquement couplée à la ou aux fibres optiques (47).

5. Capteur (10 ; 30 ; 40 ; 50 ; 70) selon la revendication 1, comportant en outre :
une deuxième rainure (13 ; 53) formée sur la surface du substrat ;
un deuxième élément capteur sol-gel (14 ; 54) ayant des première et deuxième extrémités et formé dans la deuxième rainure sans que le premier colorant qui réagit avec l'environnement avoisinant ne modifie l'intensité de la lumière transmise de la première extrémité à la deuxième extrémité via la deuxième élément capteur sol-gel.

6. Capteur (10 ; 30 ; 40 ; 50 ; 70) selon la revendication 1, où le premier élément capteur sol-gel (14 ; 54) et le premier colorant sont formés dans la première rainure au moyen d'un processus de dépôt.

7. Capteur (10 ; 30 ; 40 ; 50 ; 70) selon la revendication 5, où le substrat (11 ; 51) est une matière plastique moulée et la première rainure est moulée dans la matière plastique moulée.

8. Capteur (10 ; 30 ; 40 ; 50 ; 70) selon la revendication 7, comportant en outre un prisme (71) moulé dans le substrat (51), le prisme étant optiquement couplé de façon à recevoir la lumière de la deuxième extrémité du premier élément capteur sol-gel (13 ; 53) et réfléchissant la lumière dans la deuxième extrémité du deuxième élément capteur sol-gel (14 ; 54).

9. Capteur (10 ; 30 ; 40 ; 50 ; 70) selon la revendication 1, où le premier colorant est l'un des colorants suivants, à savoir fluorescéine, vert de bromocrésol, pourpre de bromocrésol, Ru(pby)²⁺ ou Ru(Ph₂phen)₃²⁺.

10. Capteur (10 ; 30 ; 40 ; 50 ; 70) selon la revendication 5, comportant en outre:
une troisième rainure (24 ; 53) formée sur la surface du substrat ;
un troisième élément capteur sol-gel (17 ; 57) formé dans la troisième rainure, avec un deuxième colorant qui répond, différemment du premier colorant, à l'environnement avoisinant de manière à modifier l'intensité de la lumière transmise d'une première extrémité à une deuxième extrémité via le troisième élément capteur sol-gel.
